(19) Europäisches Patentamt
European Patent Office
Office européen des brevets

(11) Publication number : 0 227 283 B1

(12) # EUROPEAN PATENT SPECIFICATION

(45) Date of publication of patent specification : 23.01.91 Bulletin 91/04

(51) Int. Cl.$^5$ : D01F 9/10

(21) Application number : 86308752.4

(22) Date of filing : 11.11.86

(54) **High-purity silicon nitride fibers and process for producing same.**

(30) Priority : 19.11.85 JP 257824/85

(43) Date of publication of application : 01.07.87 Bulletin 87/27

(45) Publication of the grant of the patent : 23.01.91 Bulletin 91/04

(84) Designated Contracting States : DE FR GB

(56) References cited :
EP-A- 0 200 326
FR-A- 2 197 829
US-A- 4 397 828
US-A- 4 535 007
CHEMICAL ABSTRACTS, vol. 104, no. 6, February 1986, page 141, abstract no. 36340r, Columbus, Ohio, US; & JP-A-60 145 903 (TOA NENRYO KOGYO K.K.) 01-08-1985
CHEMICAL ABSTRACTS, vol. 102, no. 24, June 1985, page 127, abstract no. 206067k, Columbus, Ohio, US; & JP-A-59 207 812 (TOA NENRYO KOGYO K.K.) 26-11-1984

(73) Proprietor : TOA NENRYO KOGYO KABUSHIKI KAISHA
1-1 Hitotsubashi, 1-Chome Chiyoda-Ku
Tokyo 100 (JP)

(72) Inventor : Arai, Mikiro
4-6, Nishitsurugaoka 1-Chome Ohimachi
Iruma-gun Saitama (JP)
Inventor : Nishii, Hayato
4-6, Nishitsurugaoka 1-Chome Ohimachi
Iruma-gun Saitama (JP)
Inventor : Funayama, Osamu
4-6, Nishitsurugaoka 1-Chome Ohimachi
Iruma-gun Saitama (JP)
Inventor : Isoda, Takeshi
11-5, Tohoku 1-Chome
Niiza-shi Saitama (JP)

(74) Representative : Harvey, David Gareth et al
Graham Watt & Co. Riverhead
Sevenoaks Kent TN13 2BN (GB)

EP 0 227 283 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to high-purity silicon nitride fibers and a process for producing the same. The high-purity silicon nitride fibers are very useful as heat-resistant, high-insulating materials or as reinforcing elements for composite materials.

Silicon nitride has attracted much attention, because of its favourable properties, and research thereinto has recently made remarkable developments. This material has already been applied commercially to the production of cutting tools, mechanical seals, etc., because of its resistance to heat and wear, and will find wide use in bearings, turbosupercharger rotors, etc., in the near future. It will also play an important role in the production of gas turbine blades, adiabatic engines, heat exchangers for high-temperature gas furnaces, and other equipment operating under very severe conditions.

It is well known that, when formed into fibers, silicon nitride exhibits its inherent properties such as mechanical strength, resistances to heat, impacts, oxidation and chemicals, electrical insulation, and wettability with metals, more effectively than when in a block form. The fibers have another advantage in that they are more amenable to molding. An economic production of these fibers, therefore, would open up new areas of use for silicon nitride. More specifically, silicon nitride could be used as a heat-resistant material for mesh belts, conveyor belts, curtains, and filters, or as a reinforcing element in various composite materials for engine parts, fan blades, and aircraft structures, when the fibers are processed into woven fabrics, felts, ropes, yarns, or chopped strands.

Various processes have been proposed for the production of silicon nitride fibers ; some of the more important of which are listed below :

(1) A process, wherein silicon monoxide (SiO) prepared by reducing silicate at a high temperature is reacted with ammonia and hydrogen at 1425 to 1455°C to form fibrous silicon nitride, 5 to 30 μm in diameter and about 370 mm long, on a graphite substrate. (Cunningham et al., 15th Nat. SAMPE Symp., 1969),

(2) A process, wherin an organic polycondensate having one or more silazane (SiN) groups is melt-spun to form a fibrous polymer, which is fired in an ammonia atmosphere (Ishikawa et al., Japanese Unexamined Patent Publication (Kokai) No. 200210/1982), and

(3) A process wherein organosilazane fibers prepared by melt-spinning or dry spinning organosilazanes are fired in an inert gas atmosphere to produce silicon carbide/silicon nitride composite fibers (G. Winter et al., Japanese Unexamined Patent Publication (Kokai) No. 69717/1974 ; W. Verbeek et al., Japanese Unexamined Patent Publication (Kokai) No. 20206/1974 ; Penn et al., "J. of Applied Polymer Science", Vol. 27, 3751-3761 (1982) ; Penn et al., I.E.C., "Proc. Des. Der.", Vol. 23, No. 2, 217-220 (1984) ; or Seyferth et al. U.S. Patent No. 4,482,669).

Each of the above processes and the silicon nitride fibers produced thereby have specific problems. The process (1) is incapable of making silicon nitride into continuous fibers, and is not suited for mass production because of a poor controllability. The major problems associated with the processes (2) and (3) stem from the higher carbon contents in their starting fibers, with the result that the final products have high concentrations of silicon carbide and/or free carbon. This may sometimes cause the formation of cracks, voids and pores during the thermal decomposition step, which will degrade some of the properties inherent in silicon nitride, such as electrical insulation, mechanical strength, and resistance to thermal shock. Furthermore, the fibers prepared by the processes (2) and (3) have a lowered tensile strength and electrical resistivity, known in the art to be of the order of 41 to 142 $kg/mm^2$ (402 to 1393 MPa) and 7 x $10^8$ $\Omega$·cm, when used for aerospace materials.

Other methods of making silicon nitride fibers are disclosed in EP-A-0 200 326 (which was not published until after the present application was deposited in the EPO), in US-A-4,535,007 and Japanese unexamined patent publication (Kokai) No. 145903/1985. Contrary to the present invention, according to EP-A-0 200 326, silicon nitride fibers are produced by nitridization of a starting silicon containing polymer having a high carbon content, the starting polymer being polyorganosilazane or polycarbosilazane. Nitridization is performed in an atmosphere of ammonia according to EP-A-0 200 326, and the resulting fibers have distinctly different properties from fibers, disclosed hereinafter, according to the present invention.

The route to the production of silicon nitride according to US-A-4,535,007 involves the use of a different starting material, namely an organochlorosilane and again the resulting fibers will have distinctly different properties from fibers according to the present invention.

Japanese unexamined patent publication (Kokai) No. 145903/1985 discloses a process for the preparation of an inorganic polysilazane from an organic adduct of a halosilane, the polysilazane having use as a silicon nitride precursor. According to this document, the precursor is fired to produce short-fiber silicon nitride, which becomes crystalline after firing at 1100°C.

The primary objective of the present invention is to solve the above problems associated with silicon nitride fibers and the processes for producing the same.

After extensive investigations into the above problems, the inventors found that the problems associated with conventional silicon nitride fibers and the processes therefor can be solved by using perhydropolysilazanes as the main starting material ; this results in a novel, low carbon-containing continuous fiber.

The present invention provides a continuous silicon nitride fiber made from perhydropolysilazane, said fiber being characterised by having a carbon content of 5 weight percent or less, and by the fiber being amorphous at 1200°C and having a fiber size of 10 to 30 µm in diameter, a tensile strength of [294 - 2158 MPa] (30 to 220 kg/mm$^2$), a modulus of elacticity of (70 - 299 GPa) (7 to 30 tons/mm$^2$) and a resistivity of 2 to 7 × $10^{10}$ ohm·cm.

Also according to this invention, there is provided a process for producing a continuous amorphous silicon nitride fiber, characterised in that a starting material comprising perhydropolysilazane is spun to obtain a continuous fiber and the resultant fiber is fired at a temperature of 800-1300°C to obtain a continuous amorphous silicon nitride fiber containing not more than 5% by weight of carbon and which retains an amorphous state at 1200°C.

Embodiments of the present invention are now explained in more detail in the following non-limitative description.

The perhydropolysilazanes used as the main starting material in the process of the present invention are obtained by ammonolyzing one or more dihalosilanes of the formula : $SiH_2X_2$ or $Si_2H_4X_2$,where X represents F, Cl, Br or I, directly or after formation of an adduct with a Lewis base. The perhydropolysilazanes are preferably polymers having mainly a skeleton of the formula (1) :

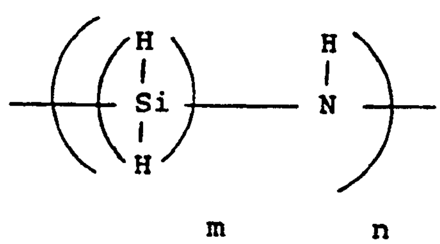

(1)

where, m = 1 or 2, and n represents polymerization degree. The perhydropolysilazanes of the above formula (1) may be a linear or cyclic polymer, or even a cross-linked or three-dimensional polymer. Perhydropolysilazanes are characterized in that they comprise only silicon, hydrogen and nitrogen atoms, but not carbon atoms. In the present invention, perhydropolysilazanes are obtained particularly from $SiH_2X_2$ as the starting material.

The silicon nitride fibers of the present invention are characterized by an extremely low carbon content. Desirably, therefore, the starting material is free of carbon atoms, as far as possible. The starting material, however, may contain silazanes having carbon atoms, so long as the carbon content of the final product (silicon nitride fibers) is 5 wt% or less. Examples of the silazanes having carbon atoms include those having a skeleton of the formula (2) :

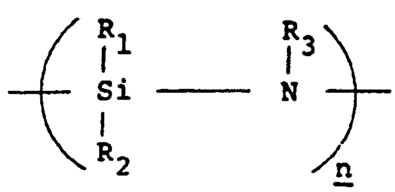

(2)

where $R_1$, $R_2$ and $R_3$ may be the same or different, and each represents a hydrogen atom or an alkyl, aryl, vinyl or allyl group with the proviso that at least one of $R_1$, $R_2$, and $R_3$ has a carbon atom, and n represents a polymerization degree ;
silazanes having both skeletons of the above formulae (1) and (2) ; silazanes not having the skeleton represented by the formula (2), which are obtained by pyrolysis of $CH_3Si(NHCH_3)_3$, $(CH_3)_2Si(NHCH_3)_2$ by ammonolysis of $RSiX_3$ where R represents $CH_3$ or $C_6H_5$, and X a halogen atom ; and the polymers thereof. Further, polysilanes, polycarbosilanes, etc., may be included in the starting material.

Though the polymerization degree n of the perhydropolysilazanes used in the present invention is not particularly limited, it is preferably 15 or more. If it is less than 15, the fluidity becomes excessively high and

makes spinning difficult. Although the upper limit of the polymerization degree is not particularly limited, so long as the polymer is soluble in the solvent, usually it is preferably 40 or less to make the synthesis proceed smoothly.

The applicant has previously disclosed a process for producing perhydropolysilazanes of the above formula (1), particularly those having a polymerization degree $\underline{n}$ of 15 to 40 (see Japanese Unexamined Patent Publication (Kokai) No. 207812/1984). The polymers of perhydropolysilazanes proposed by the applicant have a higher polymerization degree than those of the perhydropolysilazanes having a polymerization degree as low as 7 to 15, proposed by Stock or Seyferth [Stock et al. Berichte, Vol. 54, 740 (1921), or Seyferth et al., U.S. Patent No. 4,397,828]. The former are in the form of a highly viscous oil or solid when isolated, while the latter are in the form of a liquid which cannot be solidified or which is solidified slowly over several days, when isolated. Thus, the properties of the former are completely different from those of the latter.

The starting material is dissolved in an inert solvent for the later spinning. The usable inert solvents include, for example, hydrocarbons, halogenated hydrocarbons, ethers, nitrogen compounds and sulfur compounds. Examples of preferred solvents include hydrocarbons such as pentane, hexane, isohexane, methylpentane, heptane, isoheptane, octane, isooctane, cyclopentane, methylcyclopentane, cyclohexane, methylcyclohexane, benzene, toluene, xylene and ethylbenzene ; halogenated hydrocarbons such as methylene chloride, chloroform, carbon tetrachloride, bromoform, ethylene chloride, ethylidene chloride, trichloroethane, tetrachloroethane and chlorobenzene ; ethers such as ethyl ether, propyl ether, ethyl butyl ether, butyl ether, 1,2-dioxyethane, dioxane, dimethyloxane, tetrahydrofuran, tetrahydropyran and anisole; nitrogen compounds such as diethylamine, triethylamine, piperidine, pyridine, picoline, lutidine, ethylenediamine and propylenediamine ; and sulfur compounds such as carbon disulfide, diethyl sulfide, thiophene and tetrahydrothiophene.

Perhydropolysilazanes are dissolved in a suitable amount of the solvent to make a viscous solution. Although the solution thus prepared has insufficient spinnability for dry spinning, its spinnability can be increased by adding thereto a small amount of one or more organic, macromolecular spinning agents. Examples of such agents include polyethers, polyamides, polyesters, vinyl polymers, polythioethers and polypetides. Among them, polyethylene oxide, polyisobutylene, polymethyl methacrylate, polyisoprene, polyvinylacetate and polystyrene are particularly preferred.

Although the interrelationship between the concentration of perhydropolysilazanes and spinnability of the solution cannot be described in a general manner, since it varies depending on the polymerization degree of perhydropolysilazanes, solvent and kind and amount of the spinning agent, usually a solution having a viscosity at room temperature of 1 to 5000 poise (0.1 to 500 Pa s)is preferred. Therefore, the viscosity of the spinning solution must be adjusted within that range. To adjust the viscosity in that range and, simultaneously, to adjust the carbon content of the final product to 5 wt% or less, the amount of spinning agents should be in the range of from 0.0001 to 0.1 parts by weight per part by weight of perhydropolysilazanes in the spinning solution. The solution is concentrated by an ordinary process, such as vacuum distillation, to obtain a spinning solution having a suitable viscosity. The spinning solution, after concentration, contains perhydropolysilazanes at 5 to 95 wt%.

The spinning is effected advantageously by a dry spinning process. In addition, a centrifugal or blow spinning process can be employed. The spinning is effected in an inert gas atmosphere at room temperature or, if necessary, by heating the spinning solution. In the latter case, the heating must be effected carefully, since thermal decomposition of the perhydropolysilazanes starts to occur at above 100°C. After the spinning, the fibers are dried either by heating under reduced pressure, or by passing a hot inert gas thereover.

Thus, fibers particularly continuous fibers, of perhydropolysilazanes are produced which are colorless. These fibers have sufficient strength before being fired that the process can be modified in such a way that the fibers are processed into yarns or woven fabrics before firing.

An important feature of the process of the present invention for producing silicon nitride fibers is that high-purity, continuous fibers of silicon nitride are obtained. Nevertheless, this process can be employed for the production not only of filaments (continuous fibers) but also short fibers, which can, for example, be obtained by cutting the fired, continuous silicon nitride fibers.

The dry perhydropolysilazanes are preferably heat-treated at around 100°C in an inert gas atmosphere, to ensure that the solvent is completely removed and, at the same time, to minimize the formation of cracks, voids and pores during the firing step by promoting cross-linking between the molecular chains of perhydropolysilazanes.

The perhydropolysilazane fibers prepared by the process of the present invention can be fired directly, i.e., without using additional curing, since they are infusible by heat. The gas atmosphere is preferably nitrogen, but ammonia or a gaseous mixture of any of nitrogen, ammonia, argon, hydrogen, etc., may be employed as the atmosphere gas.

The firing temperature is 800 to 1300°C ; below 800°C the firing will take an excessively long time, and above 1300°C energy may be excessively wasted and/or the fibers may be degraded by heat. One of the important characteristics of the present invention is that the process involves firing which is effected at 1300°C or lower, at 800 to 1300°C, and preferably at 900 to 1200°C, to produce amorphous silicon nitride fibers. In contradistinction, inorganic fibers produced by the precursor process, such as carbon, silicon carbide, silicon oxynitride and alumina fibers, are generally characterized in that the amorphous fibers have more favorable mechanical properties but a lower modulus of elasticity than the crystalline. It is believed that amorphous silicon nitride produced by the precursor process is transformed into α-type crystalline phase at 1200°C or higher. The conventional processes which involve firing effected at 1200°C or higher, therefore, cannot produce amorphous silicon nitride fibers. Thus, the present invention also provides novel amorphous short fibers of high-purity silicon nitride. Organosilazane fibers can be amorphous when fired at 1200°C or lower ; but, however, are generally of a low-purity, containing high proportions of impurity carbon atoms which may cause the formation of silicon carbide and/or free carbon when exposed to higher temperatures. It is to be noted that the amorphous silicon nitride fibers produced by the process of the present invention may be further treated at higher temperature into a crystalline phase.

It is more desirable to fire the silicon nitride fibers under tension, to make the product mechanically stronger.

The most important feature of the process of the present invention comes from use mainly of perhydropolysilazanes represented by the formula (1), which are free of carbon in their molecular structures. This will solve those problems involved in the afore-mentioned processes (2) and (3) which produce products containing high proportions of silicon carbide and/or free carbon. A typical elementary composition of the product of the present invention is as follows :

Si : 55 to 70 wt%
N : 25 to 40 wt%
C : 5 wt% or less

Thus, the product of the present invention is much lower in carbon content, and hence much higher in resistivity (2 to 7 × $10^{10}$ Ω·cm) than those given by the processes (2) and (3). Less than 1 wt%, even less than 0.1 wt% of the carbon content can be attained in the product of the present invention.

The product of the present invention will be contaminated with oxygen which is introduced therein in a series of the steps from feed preparation to firing, since dihalosilanes as the starting material and perhydropolysilazanes obtained therefrom by ammonolysis are highly susceptible to oxygen and moisture in the air. The oxygen content, usually at 5 wt% at the highest, can be greatly reduced by designing the production system to be air-tight. It is also possible to control oxygen content in the final product to a prescribed level, such as that associated with silicon oxynitride, by adjusting the oxygen and/or water concentration in each production step, or by further treating it with an oxygen-containing compound.

The process of the present invention can produce continuous silicon nitride fibers which have the following favorable characteristics by combining the spinning and firing steps presented earlier.

fiber size : 10 to 30 μm in diameter
tensile strength : 294 to 2158 MPa (30 to 220 kg/mm$^2$)
modulus of elasticity : 70 to 299 GPa (7 to 30 tons/mm$^2$), and
resistivity : 2 to 7 × $10^{10}$ Ω·cm

Such continuous fibers cannot conceivably be produced by the conventional process (1) that tries to produce short silicon nitride fibers in a gas phase.

The higher-molecular-weight perhydropolysilazanes (degree of polymerization : 15 to 40) as the desired starting material for the process of the present invention are in the form of either high-viscosity oil or solid when isolated. This sharply distinguishes them from the lower-molecular-weight perhydropolysilazanes (degree of polymerization : 7 to 15), as discussed earlier, and provides the process of the present invention with several advantages of industrial importance, as follows, in addition to the production of high-purity silicon nitride, which is common to the processes using perhydropolysilazanes as the starting material.

(i) The spinnability and solidifiability of the product immediately after spinning are improved remarkably. The lower-molecular-weight perhydropolysilazanes are unsuitable for mass production, because of their extremely low solidifiability and, hence, require heating for a long time or plasma irradiation, in order to promote cross-linking between the molecular chains after spinning, although the spinnability can be adjusted to an acceptable level by the aid of a spinning agent.

(ii) The loss of low-boiling components and thermal decomposition products can be controlled to a very small extent during the firing step, with the result that the product yield after firing can be increased to as high as 80%. By contrast, the product yield with a process using the lower-molecular-weight perhydropolysilazanes will be about 69%.

As described earlier, the silicon nitride fibers of the present invention can be amorphous, depending on the temperature used for firing. The amorphous silicon nitride fibers have higher tensile strengths and lower moduli of elasticity than the polycrystalline, by about 98 to 1177 MPa (10 to 120 kg/mm²) and 0 to 60 GPa (0 to 6 tons/mm²), respectively. Thus, either amorphous or polycrystalline silicon nitride fibers can be produced by the process of the present invention interchangeably for the final application, e.g., the amophous as heat-resistant, structural materials, and the polycrystalline as high-modulus reinforcing agents for composite materials.

The present invention will be further illustrated with the following examples, with reference to the drawings. In the drawings :

Figure 1 is an X-ray diffraction pattern of silicon nitride fibers obtained by the present invention ; and

Figs. 2 and 3 are electron micrographs of silicon nitride fibers obtained by the present invention.

The following examples by no means limit the present invention.

According to the present invention, high-purity silicon nitride fibers having an extremely low carbon content are provided. The high-purity silicon nitride fibers have high insulating properties (for example, resistivity of 2 to $10^{10}$ Ω·cm) and favorable mechanical properties (for example, a tensile strength of 294 to 2158 MPa (30 to 220 kg/mm²) and a modulus of elasticity of 70 to 299 GPa (7 to 30 tons/mm²). The fibers are useful as heat-resistant, highly insulating materials, or reinforcing elements for composite materials, in particular those for aerospace services. Further, the present invention provides a process for producing the high-purity silicon nitride fibers having these excellent properties on an industrial scale. It should be emphasized that the feed to the spinning step in the process of this invention exhibits a high spinnability, the effluent therefrom has a high solidifiability, and the fibers are produced at a very high ceramic yield.

Example 1

A 1-ℓ four-necked flask was provided with a gas-inlet tube, mechanical stirrer and Dewar condenser. The reactor was purged with oxygen-free, dry nitrogen, to which 490 ml of degassed dry pyridine was added and then cooled with ice. Then, 51.6 g of dichlorosilane was added thereto to form a colorless, solid adduct ($SiH_2Cl_2 \cdot 2C_5H_5N$). The reaction mixture was cooled with ice, to which 51.3 g of ammonia purified by passing it through sodium hydroxide and activated carbon was added, with nitrogen gas as a carrier, while stirring the content.

On completion of the reaction, the reaction mixture was separated centrifugally into the supernatant and residual phases. The latter was washed with dry methylene chloride to extract remaining perhydropolysilazanes, the extract being combined with the supernatant phase. The mixture was then filtered in a nitrogen atmosphere to obtain about 850 ml of the filtrate. The solvent was distilled off from 5 ml of the filtrate under a reduced pressure to obtain 0.103 g of perhydropolysilazanes in the form of a resinous solid.

50.2 mg of polyethylene oxide (molecular weight : $5 \times 10^6$) was added to 240 ml of the filtrate containing perhydropolysilazanes and the mixture was stirred vigorously for 1 hour and concentrated by distilling off the solvent under a reduced pressure to obtain 30 wt% spinning solution of perhydropolysilazanes in pyridine. The spinning solution was filtered, defoamed, and spun by a dry spinning process in a nitrogen atmosphere to obtain white fibers. The fibers were dried at 50°C under a reduced pressure for 4 hours, heat-treated at 100°C in a nitrogen atmosphere for 3 hours and heated at 1050°C in a nitrogen atmosphere in a closed electric furnace for 5 hours to obtain black fibers.

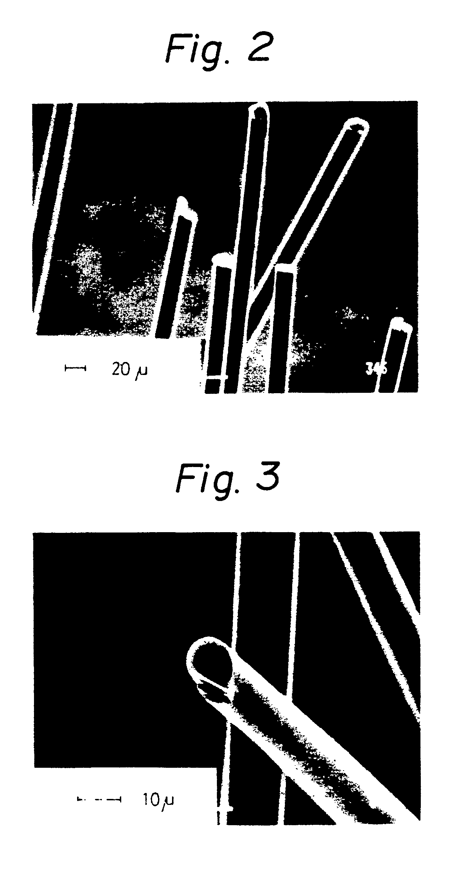

According to the chemical analysis, the obtained fibers had the following elementary composition : 62.5 wt% of silicon, 34.3 wt% of nitrogen, 0.4 wt% of carbon, 3.1 wt% of oxygen, and 0.01 wt% or less of metal elements (impurities). According to X-ray diffractometry, the product was amorphous silicon nitride as shown in Fig. 1. Figures 2 and 3 present electron micrographs (SEM) of the fibers. The fibers were dense, free of cracks of voids, and had a diameter of 10 to 30 μm, tensile strength of 392 to 2158 MPa (40 to 220 kg/mm²), modulus of elasticity of 90 to 299 GPa (9 to 30 tons/mm²), and electric resistivity of 2 to $7 \times 10^{10}$ Ω·cm.

Example 2

0.173 g of polyethylene oxide (molecular weight : $5 \times 10^6$) was added to 240 ml of the filtrate containing perhydropolysilazanes prepared in Example 1. The mixture was stirred vigorously for 1 hour, and was concentrated by distilling off under a reduced pressure to furnish a spinning solution. This solution was spun, and the resultant fiber was dried and heat-treated in the same manner as in Example 1 to prepare black fibers having a diameter of 10 to 30 μm.

According to X-ray diffractometry, the fibers were amorphous. According to chemical analysis, the product had the following elementary composition : 60.6 wt% of silicon, 33.0 wt% nitrogen, 2.3 wt% of carbon, 3.9 wt% of oxygen, and 0.01 wt% or less of metal elements.

Example 3

0.247 g of polystyrene (molecular weight : 2.5 × $10^7$) was added to 240 ml of the filtrate containing perhydropolysilazanes prepared in Example 1. The mixture was stirred vigorously for 1 hour, and was concentrated by distilling off the solvent under a reduced pressure to furnish a spinning solution. This solution was spun and the resultant fibers were dried and heat-treated in the same manner as in Example 1, to prepare black fibers having a diameter of 18 to 30 µm.

According to X-ray diffractometry, the fibers were amorphous. According to the chemical analysis, the product had the following elementary composition : 61.4 wt% of silicon, 32.1 wt% of nitrogen, 3.5 wt% of carbon, 3.4 wt% of oxygen, and 0.01 wt% or less of metal elements.

Example 4

The dried and heat-treated perhydropolysilazane fibers prepared in Example 1 were heated to 1300°C in a nitrogen atmosphere for 4 hours to prepare black fibers. Powder X-ray diffractometry of the black fibers detected an intense peak due to a $\alpha$-$Si_3N_4$ and a weak peak due to Si. According to the chemical analysis, the product had the following elementary composition : 60.4 wt% of silicon, 39.1 wt% of nitrogen, 0.3 wt% of carbon, 0.4 wt% of oxygen and 0.01 wt% or less of metal elements. The fibers had a diameter of 15 to 20 µm, a tensile strength of 294 to 981 MPa (30 to 100 kg/$mm^2$), and a modulus of elasticity of 150 to 299 GPa (15 to 30 tons/$mm^2$).

## Claims

1. A continuous silicon nitride fiber made from perhydropolysilazane, said fiber being characterised by having a carbon content of 5 weight percent or less, and by the fiber being amorphous at 1200°C and having a fiber size of 10 to 30 µm in diameter, a tensile strength of (294-2158 MPa) (30 to 220 kg/$mm^2$), a modulus of elasticity of [70-299 GPa] (7 to 30 tons/$mm^2$) and a resistivity of 2 to 7 × $10^{10}$ ohm·cm.

2. A fiber according to claim 1, which is amorphous at 1300°C.

3. A fiber according to claim 1 or claim 2, which has the following elementary composition :

Silicon : 55 to 70 wt%
Nitrogen : 25 to 40 wt%
Carbon : 5 wt% or less

4. A fiber according to claim 1, 2 or 3, wherein the carbon content is less than 1 wt% of the fibers, for example less than 0.1 wt% of the fibers.

5. A process for producing a continuous amorphous silicon nitride fiber, characterised in that a starting material comprising perhydropolysilazane is spun to obtain a continuous fiber and the resultant fiber is fired at a temperature of 800-1300°C to obtain a continuous amorphous silicon nitride fiber containing not more than 5% by weight of carbon and which retains an amorphous state at 1200°C.

6. A process according to claim 5, wherein one or more spinning agents are added to a solution of the starting material in an inert solvent to prepare a spinning solution having a desired spinnability and the solution is spun to form continuous fibers.

7. A process according to claim 6, wherein the fibers are heat treated at 100°C to remove the solvent therefrom before firing.

8. A process according to claim 5, 6 or 7, wherein the firing step is performed at a temperature in the range of 900-1200°C.

## Ansprüche

1. Endlosfaser, hergestellt aus Perhydropolysilazan gekennzeichnet durch einen Kohlenstoffgehalt von 5 Gew.-% oder weniger, und dadurch, daß die Faser bei 1200°C amorph ist und eine Faserabmessung von

10 bis 30 µm im Durchmesser, eine Zugfestigkeit von 294 bis 2158 MPa (30 bis 220 kg/mm²), einen Elastizitätsmodul von 70 bis 299 GPa (7 bis 30 Tonnen/mm²) und einen Widerstand von 2 bis 7 × $10^{10}$ ohm × cm aufweist.

2. Faser gemäß Anspruch 1, die bei 1300°C amorph ist.

3. Faser gemäß Anspruch 1 oder 2, die die folgende Element-Zusammensetzung aufweist :

Silicium : 55 bis 70 Gew.-%,
Stickstoff : 25 bis 40 Gew.-%,
Kohlenstoff : 5 Gew.-% oder weniger.

4. Faser gemäß den Ansprüchen 1, 2 oder 3, bei der der Kohlenstoffgehalt geringer als 1 Gew.-% der Fasern, beispielsweise geringer als 0,1 Gew.-% der Fasern ist.

5. Verfahren zur Herstellung einer amorphen Silicium-Endlosfaser, dadurch gekennzeichnet, daß man zur Erzielung einer Endlosfaser ein Perhydropolysilazan enthaltendes Ausgangsmaterial verspinnt, und daß man die resultierende Faser bei einer Temperatur von 800 bis 1300°C brennt, um eine amorphe Siliciumnitrid-Endlosfaser amorphe Siliciumnitrid-Faser zu erhalten, die nicht mehr als 5 Gew.-% an Kohlenstoff enthält und die bei 1200°C einen amorphen Zustand beibehält.

6. Verfahren gemäß Anspruch 5, bei dem man ein oder mehrere Spinnmittel in einem inerten Lösungsmittel zu einer Lösung des Ausgangsmaterials zugibt, um eine Spinnlösung mit einer gewünschten Spinnbarkeit herzustellen, und bei dem man die Lösung zur Bildung einer Endlosfaser verspinnt.

7. Verfahren gemäß Anspruch 6, bei dem man die Fasern bei 100°C wärmebehandelt werden, um das Lösungsmittel vor dem Brennen daraus zu entfernen.

8. Verfahren gemäß den Ansprüchen 5, 6 oder 7, bei dem man den Brennschritt bei einer Temperatur im Bereich von 900 bis 1200°C durchführt.

**Revendications**

1. Une fibre de nitrure de silicium continue fabriquée a partir de perhydropolysilazane, ladite fibre étant caractérisée en ce qu'elle présente une teneur en carbone de 5 pour cent en poids ou moins et en ce que la fibre est amorphe à 1200°C et présente une grandeur de fibre de 10 à 30 µm en diamètre, une résistance de rupture à la traction de 294 à 2158 MPa (30 à 220 kg/mm²), un module d'élasticité de 70 à 299 GPa (7 à 30 tonnes/mm²) et une résistivité de 2 à 7 × $10^{10}$ ohm·cm.

2. Une fibre suivant la revendication 1, qui est amorphe à 1300°C.

3. Une fibre suivant la revendication 1 ou la revendication 2, qui présente la composition élémentaire suivante :

Silicium : 55 à 70% en poids
Azote : 25 à 40% en poids
Carbone : 5% en poids ou moins

4. Une fibre suivant la revendication 1, 2 ou 3, dans laquelle la teneur en carbone est inférieure à 1% en poids des fibres, par exemple inférieure à 0,1% en poids des fibres.

5. Un procédé de production d'une fibre de nitrure de silicium amorphe continue, caractérisée en ce qu'un matériau de départ comprenant du perhydropolysilazane est filé pour obtenir une fibre continue et que la fibre qui en résulte est cuite à une température de 800 à 1300°C pour obtenir une fibre de nitrure de silicium amorphe continue ne contenant pas plus de 5% en poids de carbone et conservant un état amorphe à 1200°C.

6. Un procédé suivant la revendication 5, dans lequel il est ajouté un ou plusieurs agents de filage à une solution de matériau de départ dans un solvant inerte pour préparer une solution de filage ayant une possibilité de filage souhaitée et la solution est filée pour former des fibres continues.

7. Un procédé suivant la revendication 6, dans lequel les fibres sont traités thermiquement à 100°C pour en éliminer le solvant avant cuisson.

8. Un procédé suivant la revendication 5, 6 ou 7, dans lequel l'étape de cuisson s'effectue à une température de l'ordre de 900 à 1200°C.

Fig. 1

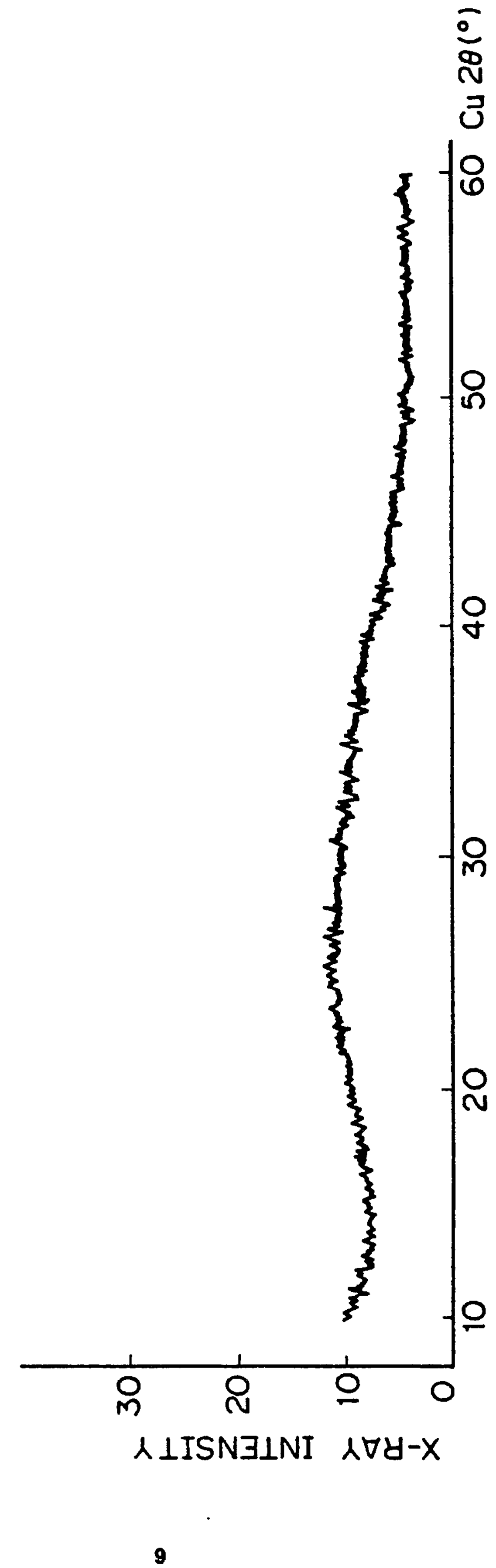


X-RAY DIFFRACTION OF AMORPHOUS $Si_3N_4$ FIBERS

Fig. 2

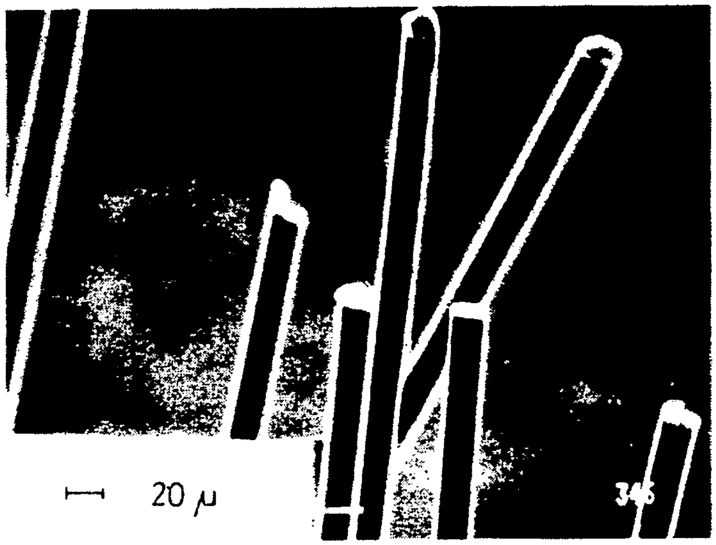


Fig. 3